# EUROPÄISCHE PATENTSCHRIFT

(11) **EP 2 162 611 B1**
(45) Veröffentlichungstag und Bekanntmachung des Hinweises auf die Patenterteilung: **03.07.2013**
(21) Anmeldenummer: 08758596.4
(22) Anmeldetag: 16.05.2008
(51) Int. Cl.: F02D 41/06, F02D 41/22, F02N 11/08, F02D 41/24

(54) **STARTZEITENSPEICHER FÜR KRAFTFAHRZEUGE**
STARTING TIME MEMORY FOR A MOTOR VEHICLE
MÉMOIRE DE TEMPS DE DÉMARRAGES POUR VÉHICULES À MOTEUR

(30) Priorität: 02.06.2007 DE 102007025925
(43) Veröffentlichungstag der Anmeldung: 17.03.2010
(73) Patentinhaber: Bayerische Motoren Werke Aktiengesellschaft, 80809 München (DE)
(72) Erfinder: DIETZ, Volker, 91315 Höchstadt (DE)
(86) Internationale Anmeldenummer: PCT/EP2008/003975
(87) Internationale Veröffentlichungsnummer: WO 2008/148459

(56) Entgegenhaltungen:
- EP-A- 1 746 544
- DE-A1- 4 134 522
- DE-A1-102007 025 692
- DE-C1- 19 701 809
- US-A1- 2002 013 655
- US-A1- 2003 120 419

## Beschreibung

Die Erfindung bezieht sich auf eine Steuerungseinheit zur Steuerung eines Einschaltvorgangs eines Fahrzeugtriebwerks in einem Kraftfahrzeug nach dem Oberbegriff des Anspruchs 1.

Das in der Regel als Brennkraftmaschine ausgestaltete Fahrzeugtriebwerk wird prinzipiell vom Fahrer des Fahrzeugs eingeschaltet. Dazu wird ein dafür vorgesehener Schlüssel in ein entsprechendes Schloss gesteckt und dieser zum Starten der Brennkraftmaschine gedreht oder ein vorhandener Druckknopf zum Aktivieren der Brennkraftmaschine betätigt. Daraufhin werden entsprechende Maßnahmen zum Starten der Brennkraftmaschine eingeleitet. Ein derartiges Starten der Brennkraftmaschine wird als Normalstart oder Schlüsselstart bezeichnet.

Um Kraftstoffverbrauch und Schadstoffemissionen zu reduzieren, werden derzeit Verfahren und Systeme entwickelt und zum Teil auch bereits eingesetzt, welche den Elektromotor oder den Hybridmotor oder die Brennkraftmaschine, also das Triebwerk eines Kraftfahrzeugs unter bestimmten Voraussetzungen bzw. bei Vorliegen definierter Abschaltbedingungen automatisch abschalten und bei Vorliegen definierter Einschaltbedingungen automatisch wieder einschalten. Derartige Verfahren und Systeme sind vor allem für den Stadtverkehr zur Reduzierung des Kraftstoffverbrauchs und gleichermaßen auch zur Reduzierung von Emissionen, vor allem auch zur Reduzierung von CO₂-Emissionen geeignet, da im Stadtverkehr das Fahrzeug oft an Ampeln oder aufgrund des Verkehrs zum Stehen kommt und der Betrieb der Brennkraftmaschine nicht erforderlich ist. Ein derartiges Starten der Brennkraftmaschine wird als automatischer Start bezeichnet. Ebenso wird ein derartiges Abschalten als automatischer Stopp bezeichnet.

Verfahren und Steuerungseinheiten zum automatischen Abschalten oder Einschalten einer Antriebseinheit bzw. eines Fahrzeugtriebwerks können in verschiedenen Fahrzeugfunktionen verwendet werden. So wird bspw. im Rahmen einer sog. "Automatischen Start Stopp Funktion" das Fahrzeugtriebwerk in Abhängigkeit von vorgegebenen Bedingungen und bei bestimmten Verkehrssituationen, z. B. an Ampeln oder im sog. Stop-and-go-Verkehr, ab- und auch wieder eingeschaltet. Ebenso wird bei Fahrzeugen, die mit einer hybriden Antriebseinheit bestehend aus einer Brennkraftmaschine (d.h. einem Verbrennungsmotor mit Verbrennungen, die nach einem Otto-, Diesel - oder ähnlich gearteten thermodynamischen Prozessen ablaufen) und einem Elektromotor ausgestattet sind, diese Brennkraftmaschine teilweise abgeschaltet und wieder eingeschaltet um Kraftstoff zu sparen und Emissionen zu reduzieren.

Eine Möglichkeit der Ausprägung solcher genannten Verfahren und Systeme ist die aus der DE 101 61 343 A1 bekannte automatische Abschalt- und Einschaltsteuervorrichtung für einen Verbrennungsmotor. Dabei nimmt die Steuervorrichtung entsprechende Maßnahmen zum Abschalten des Verbrennungsmotors vor, wenn alle genannten Abschaltbedingungen erfüllt sind. Sind vorgegebene Einschaltbedingungen erfüllt, nimmt die Steuervorrichtung entsprechende Maßnahmen zum automatischen Einschalten des Verbrennungsmotors vor.

Unter Umständen kann es vorkommen, das bei Fahrzeugen, die mit einer automatischen Abschalt- und Einschaltvorrichtung ausgestattet sind, aufgrund einer aktiven Abschaltverhinderungsbedingung (z. B. liegt der Ladezustand der Batterie unter einem vorgegebenen Grenzwert) kein automatisches Abschalten der Brennkraftmaschine vorgenommen wird, dies aber für den Fahrer nicht nachvollziehbar ist. Analog dazu kann es auch vorkommen, dass aufgrund einer aktiven Einschaltverhinderungsbedingung (z. B. ist der liegt der Füllstand des Fahrzeugtanks unter einen vorgegebenen Grenzwert) kein automatisches Einschalten erfolgt, dies aber ebenfalls für den Fahrer nicht nachvollziehbar ist. Um derartigen "Fehlern" auf den Grund gehen zu können, wird in der noch unveröffentlichten DE 102007009836 eine Steuerungseinheit zur Steuerung eines automatischen Abschalt- und/oder Einschaltvorgangs eines Fahrzeugtriebwerks vorgeschlagen, wobei die Steuerungseinheit ein Speichersignal zum Speichern zumindest eines einer Abschaltverhinderungsbedingung zugeordneten Speichereintrags an eine Speichereinheit aussendet, wenn zwar alle Abschaltaufforderungsbedingungen erfüllt sind, gleichzeitig aber zumindest eine Abschaltverhinderungsbedingung aktiv ist und das Fahrzeugtriebwerk deshalb nicht abgeschaltet wird. Anhand des Speichereintrags, der mittels eines Auslesegerätes ausgelesen werden kann, kann u. U. festgestellt werden, welche Ursache für den unterlassenen automatischen Abschaltvorgang verantwortlich waren. Analog dazu können Speichereinträge auch dann vorgenommen, wenn ein automatisch angeforderter automatischer Start nicht vorgenommen wird.

Sobald in einem Fahrzeug ein Start der Brennkraftmaschine angefordert wird, entweder manuell durch den Fahrer oder automatisch aufgrund vorgegebener Einschaltbedingungen (ohne dass eine Einschaltverhinderungsbedingung erfüllt ist), werden entsprechende Maßnahmen zum Einschalten der Brennkraftmaschine vorgenommen. Diese Maßnahmen können in Abhängigkeit von der Art der Einschaltaufforderung unterschiedlich ausgestaltet sein.

Unter Umständen kann es hier vorkommen, dass der Start der Brennkraftmaschine vom Beginn des Einschaltvorgangs, bspw. von Beginn eines durch den Fahrer gesetzten Start-Triggers, bis zum Erreichen eines erfolgreichen Starts länger dauert, als vom Fahrer erwartet wird. Dies könnte zu Kundenirritationen oder sogar zu Kundenreklamationen führen.

Aufgabe der Erfindung ist es somit, derartige Kundenreklamationen zumindest für das Werkstättenpersonal nachvollziehbarer zu gestalten.

Aus der gattungsbildenden DE 41 34 522 A1 ist ein Verfahren zur elektronischen Kraftstoffeinspritzsteuerung für Verbrennungsmotoren bekannt, im Rahmen dessen unter anderem die Anlasszeit ermittelt und gespeichert wird. Weiter ist aus der zum Zeitpunkt dieser Prioritätsanmeldung noch nicht veröffentlichten DE 10 2007 025 692 A1 ein Analyseverfahren für Startvorgänge bekannt, bei dem bspw. die Startdauer erfasst bzw. ermittelt wird und aus daraus abgeleiteten Prozessgrößen der Startvorgang ausgewertet und klassifiziert wird.

Diese Aufgabe wird durch eine Steuerungseinheit nach Patentanspruch 1 und ein Auslesegerät nach Patentanspruch 22 gelöst. Vorteilhafte Weiterbildungen ergeben sich aus den abhängigen Ansprüchen.

Grundgedanke ist es somit, die eben genannte Zeitdauer messbar und für das Werkstättenpersonal bewertbar zu machen, indem eine Speichereinheit vorgesehen ist, in der Informationen gespeichert werden, die Aufschluss darüber geben, dass, und warum der Startvorgang der Brennkraftmaschine nicht innerhalb der herkömmlichen Zeitdauer erfolgt ist.

Im Hinblick auf die Steuerung eines Einschaltvorgangs eines Fahrzeugtriebwerks, insbesondere einer Brennkraftmaschine, zeichnet sich die erfindungsgemäße Steuerungseinheit dadurch aus, dass die Steuerungseinheit Zeitdauer des Startvorgangs, also vom Beginn des Startvorgangs bis zum Erreichen des erfolgreichen Startendes ermittelt, und in Abhängigkeit von der ermittelten Zeitdauer ein zeitdauerabhängiges Speichersignal, welches die Zeitdauer selbst sein kann, an eine vorhandene Speichereinheit sendet, die darauf einen entsprechenden zeitdauerabhängigen Speichereintrag vornimmt. Die Speichereinheit kann dabei Teil einer ohnehin vorhandenen Speichereinheit sein, deren Speichereinträge mit entsprechenden Auslesegeräten in Werkstätten ausgelesen werden können.

Wie bereits eingangs erwähnt, kann der Einschaltvorgang durch manuelle Betätigung eines entsprechenden Bedienelements, oder automatisch, bspw. im Rahmen eines sog. automatischen Start-Stopp-Systems aktiviert werden. Sobald die Einschaltaufforderung zum Starten bzw. zum Einschalten der Antriebseinheit vorliegt oder dies aufgrund eines entsprechenden Algorithmus innerhalb der Steuerungseinheit ermittelt wird, sendet diese ein Einschaltsignal, welches aus einem oder mehreren Signalen bestehen kann, an entsprechende Aktuatoren aus. Gleichzeitig wird mit dem Vorliegen der Einschaltaufforderung ein Timer gestartet, der die Zeitdauer des Startvorgangs ermittelt, d. h. der Timer wird gestoppt, sobald eine vorgegebene, gleichmäßige (Leerlauf-) Drehzahl der Antriebseinheit erreicht ist. In Abhängigkeit von der ermittelten Zeitdauer wird ein zeitdauerabhängiges Speichersignal an die Speichereinheit ausgesendet, welches ein Maß für die Zeitdauer ist. Die Speichereinheit nimmt darauf hin einen zeitdauerabhängigen Speichereintrag vor, der wiederum Aufschluss über die für den Einschaltvorgang benötigte Zeitdauer gibt. Idealerweise wird in der Speichereinheit die ermittelte Zeitdauer zumindest des letzen Einschaltvorgangs in einem Zeitdauer-Speichereinheit gespeichert. Es kann aber auch eine vorgegebene Anzahl von zuletzt ermittelten zeitdauerabhängigen Speichereinträgen eingetragen werden, die kontinuierlich überschrieben werden können.

Da für den Fahrer bzw. für die den Speicher auslesende Person eigentlich nur Einträge interessant sind, die aufgrund eines zu lang dauernden Einschaltvorgangs eingetragen werden, kann in einer vorteilhaften Ausgestaltung der Erfindung das zeitdauerabhängige Speichersignal bspw. nur dann gesendet werden bzw. ein zeitdauerabhängiger Speichereintrag nur dann vorgenommen werden, wenn die ermittelte Zeitdauer einen vorgegebenen ersten Zeitdauergrenzwert überschreitet. Dieser erste Zeitdauergrenzwert sollte dabei so gewählt werden, dass er in etwa der Zeitdauer eines gelungenen (schnellen) Einschaltvorgangs entspricht.

Die Speichereinheit kann zusätzlich oder Alternativ zur Zeitdauer-Speichereinheit, in der ein Maß für die Zeitdauer zumindest eines Einschaltvorgangs gespeichert wird, mit einer oder mehreren Zähleinheiten ausgestattet sein. In jeder Zähleinheit können die Anzahl der Einschaltvorgänge mit einer bestimmten Zeitdauer gespeichert werden, d. h. jede Zähleinheit ist einem bestimmten Zeitfenster zugeordnet, innerhalb dessen die ermittelte Zeitdauer des Einschaltvorgangs liegen kann. So kann bspw. die Anzahl der Einschaltvorgänge mit normaler Zeitdauer, mit längerer Zeitdauer und mit extremlanger Zeitdauer gespeichert werden. Dazu ist die erfindungsgemäße Speichereinheit in einer vorteilhaften Ausgestaltung derart ausgestattet, dass diese auf das zeitdauerabhängige Speichersignal den Wert einer vorhandenen ersten Zähleinheit um Eins erhöht, wenn die ermittelte Zeitdauer bzw. das zeitdauerabhängige Speichersignal erkennen lässt, dass die ermittelte Zeitdauer nicht größer als ein vorgegebener erster Zeitdauergrenzwert ist. Analog zu oben kann dieser erste Zeitdauergrenzwert dabei so vorgegeben bzw. gewählt werden, dass er in etwa der Zeitdauer eines gelungenen (schnellen) Einschaltvorgangs entspricht.

Entsprechend der ersten Zähleinheit kann die Speichereinheit mit einer zweiten Zähleinheit ausgestattet sein, dessen Wert um Eins erhöht wird, wenn die ermittelte Zeitdauer größer als der vorgegebene erste Zeitdauergrenzwert und nicht größer als ein vorgegebener zweiter Zeitdauergrenzwert ist. Der zweite Zeitdauergrenzwert sollte dabei um einen gewissen Zeitraum größer als der erste Zeitdauergrenzwert sein.

Entsprechend der ersten und zweiten Zähleinheit kann die Speichereinheit zusätzlich oder alternativ mit einer dritten Zähleinheit ausgestattet sein, dessen Wert um Eins erhöht wird, wenn die ermittelte Zeitdauer des Einschaltvorgangs größer als der vorgegebener zweiter Zeitdauergrenzwert ist.

Ist das Fahrzeug derart ausgestattet, dass die Einschaltaufforderung durch verschiedene Maßnahmen erzeugt werden kann und/oder der Einschaltvorgang ggf. durch verschiedene Maßnahmen vorgenommen werden kann, ist es sinnvoll, in der Speichereinheit zusätzlich einen Eintrag vorzunehmen, der angibt, welche Art vor Start - z. B. Normalstart oder automatischer Start - bei der ermittelten Zeitdauer vorgenommen wurde.

So kann in einer vorteilhaften Ausgestaltung der Erfindung die Steuerungseinheit zusätzlich ein artenabhängiges Speichersignal an die Speichereinheit senden und die Speichereinheit einen artenabhängigen Speichereintrag vornehmen. Vorteilhafterweise können analog zu den verschiedenen Zähleinheiten auch mehr mehrere Arten-Speicherfelder vorgesehen sein. Dabei wird das Arten-Speicherfeld, in dem der aktuelle Wert des artenabhängigen Speichereintrags eingetragen werden soll, wiederum von der ermittelten Zeitdauer vorgegeben. Vorteilhafterweise wird der artenabhängige Speichereintrag in einem vorgegebenen ersten Arten-Speicherfeld eingetragen, wenn die ermittelte Zeitdauer nicht größer als ein vorgegebener erster Zeitdauergrenzwert ist. Wenn die ermittelte Zeitdauer größer als der vorgegebene erste Zeitdauergrenzwert und nicht größer als ein vorgegebener zweiter Zeitdauergrenzwert ist, wird der artenabhängige Speichereintrag in einem vorgegebenen zweiten Arten-Speicherfeld eingetragen. Ist die ermittelte Zeitdauer größer als der vorgegebene zweite Zeitdauergrenzwert, wird der artenabhängige Speichereintrag in einem vorgegebenen dritten Arten-Speicherfeld eingetragen. Die Arten-Speicherfelder können dabei derart aufgebaut sein, dass sie eine vorgegebene Anzahl vorangegangener artenabhängiger Speichereinträge speichern können.

Zusätzlich können neben der ermittelten Zeitdauer, der Zähleinträge und dem artenabhängigen Speichereintrag auch andere Speichereinträge vorgenommen werden. Bspw. könnte ein kilometerstandabhängiger Speichereintrag vorgenommen werden, wobei der kilometerstandabhängige Speichereintrag in Abhängigkeit vom Kilometerstand bei Ermittlung der Zeitdauer, also bei dem entsprechenden Einschaltvorgang eingetragen wird.

Wird ein Einschaltvorgang gestartet und die Zeitdauer dessen ermittelt, wird zusätzlich der aktuelle Kilometerstand erfasst. Die Steuereinheit sendet zusätzlich zum zeitdauerabhängigen Speichersignal ein kilometerstandabhängiges Speichersignal an die Speichereinheit, und die Speichereinheit nimmt darauf hin einen kilometerstandabhängigen Speichereintrag vor. Bei dem kilometerstandabhängigen Speichereintrag kann es sich bspw. um den aktuell ermittelten Kilometerstand des Fahrzeugs handeln.

Vorteilhafterweise können analog zu den verschiedenen Zähleinheiten und den Arten-Speicherfeldern auch mehr mehrere Kilometerstand-Speicherfelder vorgesehen sein. Dabei wird das Kilometerstand-Speicherfeld, in dem der aktuelle Wert eingetragen werden soll, wiederum von der ermittelten Zeitdauer vorgegeben. Vorteilhafterweise wird der kilometerstandabhängige Speichereintrag in einem vorgegebenen ersten Kilometerstand-Speicherfeld eingetragen, wenn die ermittelte Zeitdauer nicht größer als ein vorgegebener erster Zeitdauergrenzwert ist. Wenn die ermittelte Zeitdauer größer als der vorgegebene erste Zeitdauergrenzwert und nicht größer als ein vorgegebener zweiter Zeitdauergrenzwert ist, wird der kilometerstandabhängige Speichereintrag in einem vorgegebenen zweiten Kilometerstand-Speicherfeld eingetragen. Ist die ermittelte Zeitdauer größer als der vorgegebene zweite Zeitdauergrenzwert, wird der kilometerstandabhängige Speichereintrag in einem vorgegebenen dritten Kilometerstand-Speicherfeld eingetragen. Die Kilometerstand-Speicherfelder können dabei derart aufgebaut sein, dass sie eine vorgegebene Anzahl vorangegangener artenabhängiger Speichereinträge speichern können.

Ist die ermittelte Zeitdauer des Einschaltvorgangs größer als ein vorgegebener erster Zeitdauergrenzwert, d. h. der Einschaltvorgang hat länger gedauert als bei dieser Art von Startvorgang zu erwarten ist, kann in einer vorteilhaften Ausgestaltung der Erfindung zusätzlich die Ursache ermittelt werden. Diese Ursache dient dem Werkstättenpersonal als Arbeitsgrundlage. Die Steuereinheit sendet dann zusammen mit der ermittelten Zeitdauer ein ursachenabhängiges Speichersignal an die Speichereinheit, die daraufhin einen entsprechenden ursachenabhängigen Speichereintrag vornimmt. Dabei kann das ursachenabhängige Speichersignal und/oder der ursachenabhängige Speichereintrag als eine sog. Bitwort mit einer vorgegebenen Länge ausgestaltet sein, wobei die Länge des Bitwortes durch die Anzahl der ermittelbaren Ursachen vorgegeben werden kann. Wird eine Ursache ermittelt, wird der Wert des dieser Ursache zugeordneten Bits auf Eins gesetzt, andernfalls bleibt er Null.

Alternativ kann der ursachenabhängige Speichereintrag auch derart ausgestaltet sein, dass bei einem Auftreten einer bestimmten Ursache eine dieser Ursache zugeordnete Ursachen-Zähleinheit um den Wert 1 erhöht wird. Dadurch kann später festgestellt werden, welche Ursachen besonders häufig für einen längeren Einschaltvorgang verantwortlich sind.

Vorteilhafterweise können analog zu den verschiedenen Zähleinheiten, den Arten-Speicherfeldern und den Kilometerstand-Speicherfelder auch mehrere Ursachenspeicherfelder vorgesehen sein. Dabei wird das Ursachen-Speicherfeld, in dem der aktuelle Wert eingetragen werden soll, wiederum von der ermittelten Zeitdauer vorgegeben. So wird der ursachenabhängige Speichereintrag in einem vorgegebenen zweiten Ursachen-Speicherfeld eingetragen, wenn die ermittelte Zeitdauer größer als ein vorgegebener erster Zeitdauergrenzwert und nicht größer als ein vorgegebener zweiter Zeitdauergrenzwert ist. Ist die ermittelte Zeitdauer größer als der vorgegebene zweite Zeitdauergrenzwert, wird der ursachenabhängige Speichereintrag in einem vorgegebenen dritten Ursachen-Speicherfeld eingetragen. Die Ursachen-Speicherfelder können dabei derart aufgebaut sein, dass sie eine vorgegebene Anzahl vorangegangener ursachenabhängiger Speichereinträge speichern können.

Werden neben dem zeitdauerabhängigen Speichereintrag mehrere andere Speichereinträge vorgenommen, die in Abhängigkeit von der Zeitdauer in verschiedene Speicherfelder eingetragen werden, werden die Grenzwerte zur Ermittlung der jeweiligen Speicherfelder idealerweise für alle Speichereinträge identisch vorgegeben.

Bei den Ursachen, die zu einem verlängerten Einschaltvorgang führen können, kann es sich um die verschiedensten Ursachen handeln. Dementsprechend kann der ursachenabhängige Speichereintrag bspw. von folgenden (ermittelbaren) Ursachen abhängen, welche Einzeln oder in Kombination auftreten und Ursache für einen verzögerten Start sein können:
(a) Die aktuelle Umgebungs-/Außentemperatur ist kleiner als ein vorgegebener Minimum-Temperaturwert oder größer als ein vorgegebener Maximum-Temperaturwert,
(b) Es liegt ein mechanischer oder elektrischer Fehler, oder auch eine Kombination aus einem mechanischen und einem elektrischen Fehler im Kraftstoffsystem vor,
(c) Es liegt ein mechanischer oder elektrischer Fehler, oder auch eine Kombination aus einem mechanischen und einem elektrischen Fehler im Kraftstoffzuführungssystem vor,
(d) Es liegt ein mechanischer oder elektrischer Fehler, oder auch eine Kombination aus einem mechanischen und einem elektrischen Fehler im Hochdruckpumpensystem vor,
(e) Der derzeitige Tankinhalt ist kleiner als ein vorgegebener Minimum-Tankinhalt,
(f) Es liegt ein mechanischer oder elektrischer Fehler, oder auch eine Kombination aus einem mechanischen und einem elektrischen Fehler im Anlasser-/Startsystem vor,
(g) Es liegt ein mechanischer oder elektrischer Fehler, oder auch eine Kombination aus einem mechanischen und einem elektrischen Fehler im Batteriesystem vor,
(h) Der Ladezustand der Batterie ist kleiner als ein vorgegebener Minimum-Ladezustand, oder die Batterie ist geschädigt oder gealtert,
(i) Es liegt ein mechanischer oder elektrischer Fehler, oder auch eine Kombination aus einem mechanischen und einem elektrischen Fehler im Kurbelwellensynchronisierungssystem vor,
(j) Es liegt ein mechanischer oder elektrischer Fehler, oder auch eine Kombination aus einem mechanischen und einem elektrischen Fehler im Nockenwellensynchronisierungssystem vor,
(k) Es liegt mechanischer oder elektrischer Fehler, oder auch eine Kombination aus einem mechanischen und einem elektrischen Fehler im System der (elektronischen) Wegfahrsperre bzw. des Diebstahlschutzsystems vor, wobei diese Funktion des Diebstahlschutzes auch in anderen (elektronische) Steuerungseinheiten enthalten sein, die in einem Systemverbund mit der genannten (elektronischen) Steuerungseinheit stehen. Ein solcher Systemverbund ist durch eine mögliche Kommunikation der (elektronischen) Steuerungseinheiten untereinander gekennzeichnet.
(l) Es liegt ein mechanischer oder elektrischer Fehler, oder auch eine Kombination aus einem mechanischen und einem elektrischen Fehler im System des Fahrzeug-Zugangssystems vor, dessen (elektronische) Steuerungseinheit befähigt ist, den Start des Fahrzeugtriebwerkes auf/nach Kundenwunsch einzuleiten. Diese Funktion des Starts kann auch in anderen (elektronische) Steuerungseinheiten enthalten sein, die in einem Systemverbund mit der genannten (elektronischen) Steuerungseinheit stehen. Es können darin auch andere (elektronische) Steuerungseinheiten enthalten sein, die in einem Systemverbund mit der genannten (elektronischen) Steuerungseinheit stehen. Ein solcher Systemverbund ist durch eine mögliche Kommunikation der (elektronischen) Steuerungseinheiten untereinander gekennzeichnet.
(m)Der aktuelle Umgebungs-/Außendruck der Luft ist kleiner als ein vorgegebener Minimum-Druckwert oder größer als ein vorgegebener Maximum-Druckwert,
(n) Es liegt ein Fehler in der Generatorkommunikation vor.

Je nach Größe der Speichereinheit ist es sinnvoll, eine gewisse Anzahl von Ursachen zu ermitteln bzw. nur bestimmte ursachenabhängige Speichereinträge vorzunehmen.

Um auf die Speichereinträge zugreifen zu können, umfasst die Erfindung neben der Steuerungseinheit zusätzlich ein Auslesegerät, das mit der Speichereinheit verbindbar ist und das derart aufgebaut ist, dass die in der Speichereinheit eingetragenen Speichereinträge ausgelesen und ggf. ausgewertet werden können.

Die Erfindung wird nun anhand eines Ausführungsbeispiels näher erläutert. Dabei zeigt die
Fig. 1 eine vereinfachte erfindungsgemäße Steuerungseinheit zur Steuerung eines Einschaltvorgangs einer Brennkraftmaschine in einem Fahrzeug,
Fig. 2 einen beispielhaften Aufbau einer Speichereinheit und
Fig. 3 einen beispielhafte Displayanzeige eines Auslesegeräts.

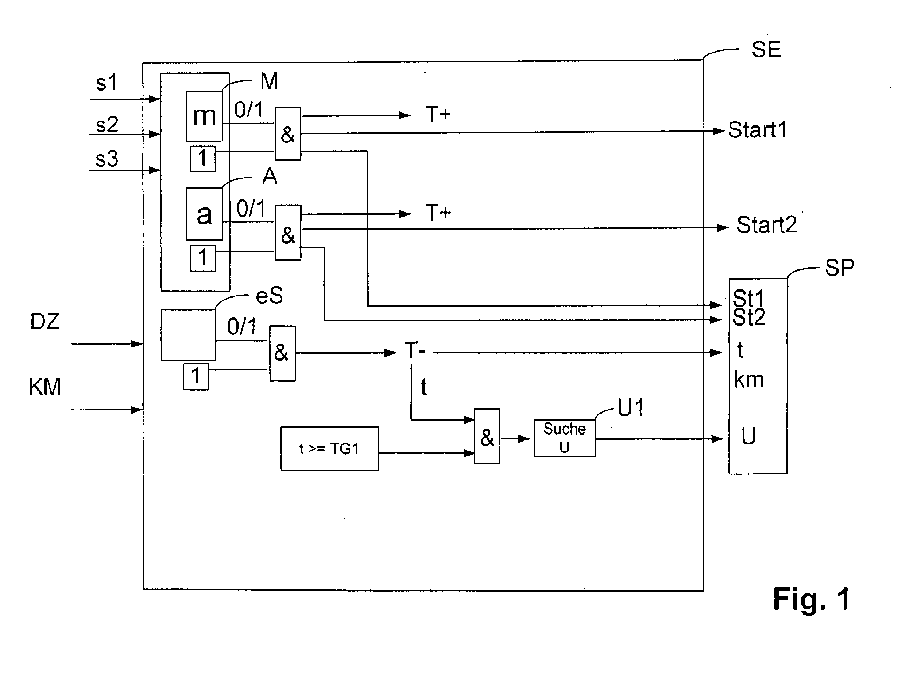

Die Fig. 1 zeigt eine Steuerungseinheit SE zur Steuerung eines Einschaltvorgangs eines hier nicht dargestellten und als Brennkraftmaschine ausgestalteten Fahrzeugtriebwerks in einem Kraftfahrzeug. In der Steuerungseinheit SE werden verschiedene Eingangssignale s1, s2 und s3 im Hinblick auf das Erkennen einer Einschaltaufforderung ausgewertet. Anhand der aktuellen Eingangssignale s1, s2 und s3 kann ermittelt werden, ob ein manueller Start m oder ein automatischer Start a vorliegt. Unter einem manuellen Start m wird ein derartiger Einschaltvorgang verstanden, der vom Fahrer bspw. durch Betätigung eines entsprechenden Start-Bedienelements oder durch Drehen eines Fahrzeugschlüssels im Zündschloss aktiviert wird. Im Gegensatz dazu wird unter einem automatischen Start a ein derartiger Einschalvorgang verstanden, der bspw. im Rahmen einer automatischen Start-Funktion einer sog. Start-Stopp-Einrichtung zum automatischen Starten der Brennkraftmaschine im Stillstand der Fahrzeugs aktiviert wird.

Sind die Bedingungen für einen manuellen Start m erfüllt, sendet eine erste Auswertelogik M eine Eins "1" aus, andernfalls eine Null "0". Bei Aussenden einer Eins "1" durch die erste Auswertelogik M, wird in der nachgeschalteten ersten Übereinstimmungseinheit & dies erkannt, und daraufhin ein erstes Einschaltsignal Start1 zum Vornehmen entsprechender Einschaltmaßnahmen zum Einschalten der Brennkraftmaschine ausgesendet. Dieses erste Einschaltsignal Start1 kann aus mehreren Steuersignalen bestehen, durch die die für den manuellen Start vorgesehenen Aktuatoren entsprechend angesteuert werden. Gleichzeitig wird ein Timer T zur Ermittlung der Zeitdauer t eines erfolgreichen Starts gestartet, also T+. Zusätzlich sendet die erste Übereinstimmungseinheit & bei einer ermittelten manuellen Einschaltaufforderung ein erstes artenabhängiges Speichersignal St1 an eine Speichereinheit SP, wobei das erste artenabhängige Speichersignal St1 die Information beinhaltet, dass es sich um einen manuell angeforderten Einschaltvorgang handelt.

Sind die Bedingungen für einen automatischen Start a erfüllt, sendet die zweite Auswertelogik A analog zur ersten Auswerteeinheit M eine Eins "1" aus, andernfalls eine Null "0". Bei Aussenden einer Eins "1" durch die zweite Auswertelogik A, wird in der nachgeschalteten zweiten Übereinstimmungseinheit & dies erkannt, und daraufhin ein zweites Einschaltsignal Start2 zum Vornehmen entsprechender Einschaltmaßnahmen zum Einschalten der Brennkraftmaschine ausgesendet. Dieses zweite Einschaltsignal Start2 kann aus mehreren Steuersignalen bestehen, durch die die für den automatischen Start vorgesehenen Aktuatoren entsprechend angesteuert werden. Gleichzeitig wird ebenfalls der Timer T zur Ermittlung der t eines erfolgreichen Starts gestartet, also T+. Zusätzlich sendet die zweite Übereinstimmungseinheit & bei einer ermittelten automatischen Einschaltaufforderung ein zweites artenabhängiges Speichersignal St2 an die Speichereinheit SP, wobei das zweite artenabhängige Speichersignal St2 die Information beinhaltet, dass es sich um einen automatisch angeforderten Einschaltvorgang handelt.

Sobald ein Einschaltsignal Start1 oder Start2 zum Vornehmen entsprechender Einschaltmaßnahmen zum Einschalten der Brennkraftmaschine ausgesendet wurde, wird in einer Erfolgslogik eS zumindest die Drehzahl DZ der Brennkraftmaschine überwacht und ein erfolgreicher Start detektiert, wenn die Drehzahl DZ einen vorgegebenen Leerlauf=Drehzahlgrenzwert erreicht hat. Die Erfolgslogik eS sendet daraufhin eine Eins "1" aus, das in einer nachgeschalteten dritten Übereinstimmungseinheit & erkannt wird. Sobald ein erfolgreicher Start erkannt wird, wird der Timer T zum Ermitteln der Zeitdauer t dieses Einschaltvorgangs gestoppt, also T-, und die ermittelte Zeitdauer t an die Speichereinheit SP gesendet. Gleichzeitig wird mit der ermittelten Zeitdauer- ein kilometerstandsabhängiges Speichersignal km an die Speichereinheit gesendet, wobei dieses Signal eine Information über den aktuell vorliegenden Kilometerstand KM beinhaltet.

Gleichzeitig wird die ermittelte Zeitdauer t mit einem vorgegebenen ersten Zeitdauergrenzwert TG1 verglichen. Der erste Zeitdauergrenzwert TG1 wird dabei derart vorgegeben, dass er in etwa einen oberen Zeitdauergrenzwert für einen einwandfrei schnell funktionierenden Einschaltvorgang wiedergibt. Dieser kann bspw. im Bereich vom 500ms bis 1000ms liegen. Der erste Zeitdauergrenzwert kann auch in Abhängigkeit von der ermittelten Art der Startaufforderung unterschiedlich vorgegeben werden. Ist die ermittelte Zeitdauer t nicht kleiner als der erste Zeitdauergrenzwert TG1, wird eine Ursachen-Ermittlungslogik U1 gestartet, in der die möglichen Ursachen für den verlängerten Startvorgang ermittelt werden. Innerhalt dieser Ursachen-Ermittlungslogik U1 können vorgegebene Ursachen überprüft werden.

Nach Beendigung der Ursachensuche übermittelt die Ursachen-Ermittlungslogik U1 ein ursachenabhängiges Speichersignal U an die Speichereinheit. Dieses ursachenabhängige Speichersignal kann bspw. als Bitwort aufgebaut sein, wobei jedem Bit eine Ursache zugeordnet ist. Wird eine bestimmte Ursache für den zu lang dauernden Einschaltvorgang ermittelt, wird das dieser Ursache zugeordnete Bit mit dem Wert Eins belegt- andernfalls bleibt der Wert dieses Bits Null.

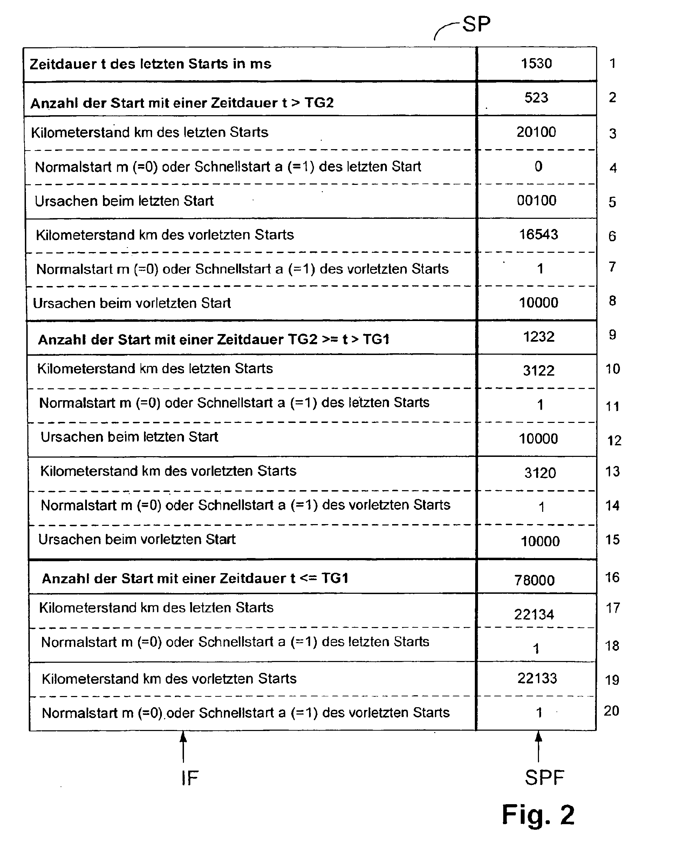

Die Speichereinheit SP kann nun in Abhängigkeit von den übermittelten Speichersignalen St1 bzw. St2, km und U und der übermittelten Zeitdauer t entsprechende Speichereinträge vornehmen. Ein beispielhafter Aufbau einer Speichereinheit SP mit entsprechenden Speichereinträgen ist in der Fig. 2 dargestellt.

Die Speichereinheit SP ist in mehrere Speichefelder SPF aufgeteilt. Zur einfacheren Lesbarkeit ist jedem Speicherfeld SPF eine Informationsfeld IF zugeordnet, welches in der Speichereinheit SP nicht vorhanden ist, sondern nur dem Verständnis dient.

Wie bereits in der Fig. 1 erläutert, sendet die Steuereinheit SE bei jedem erfolgreichen Einschaltvorgang ein zeitdauerabhängiges Speichersignal, hier die Zeitdauer t selbst an die Speichereinheit SP. Dies Speichereinheit SP nimmt daraufhin einen von diesem Signal abhängigen Speichereintrag im ersten Speicherfeld der Zeile 1 vor- hier die ermittelte Zeitdauer t. Aus der Fig. 2 ist ersichtlich, dass in diesem Beispiel der letzte Einschaltvorgang 1530ms gedauert hat.

Zusätzlich wird in der Speichereinheit die Anzahl der Einschaltvorgänge, die innerhalb eines vorgegebenen Zeitintervalls liegen, in entsprechenden Zähleinheiten gespeichert. Dabei wird für jedes vorgegebene Zeitinterball eine eigene Zähleinheit bereitgestellt. Die Zähleinheit befinden sich bei der Speichereinheit in Fig. 2 in den Zeilen 2, 9 und 16. In der dritten Zähleinheit (Zeile 2) wird die Anzahl der Starts bzw. Einschaltvorgänge gespeichert, deren Zeitdauer t größer als ein vorgegebner zweiter Zeitdauergrenzwert TG2 ist. Der vorgegebene zweite Zeitdauergrenzwert kann bspw. in einer Größenordnung von 4000ms vorgegeben werden. Laut Fig. 2 wurden bereits 523 derartige Zeitdauern ermittelt. In der zweiten Zähleinheit (Zeile 9) wird die Anzahl der Starts bzw. Einschaltvorgänge gespeichert, deren Zeitdauer t größer als ein vorgegebner erster Zeitdauergrenzwert TG1 und nicht größer als der vorgegebene zweite Zeitdauergrenzwert TG2 ist. Der vorgegebene erste Zeitdauergrenzwert kann bspw. in einer Größenordnung von 1000ms vorgegeben. Laut Fig. 2 wurden bereits 1232 derartige Zeitdauern ermittelt. In der ersten Zähleinheit (Zeile 16) wird die Anzahl der Starts bzw. Einschaltvorgänge gespeichert, deren Zeitdauer t nicht größer als ein vorgegebner erster Zeitdauergrenzwert TG1 ist. Laut Fig. 2 wurden bereits 78000 derartige Zeitdauern ermittelt.

Weiter umfasst die Speichereinheit Kilometerstand-Speicherfelder in den Zeilen 3, 10, 17 und nachgeordnete Kilometerstand-Speicherfelder 6, 13, und19, in denen kilometerstandabhängige Speichereinträge vorgenommen werden. In welchem Kilometerstand-Speicherfeld der kilometerstandabhängige Speichereintrag vorgenommen wird, hängt von der ermittelten t des entsprechenden Einschaltvorgangs ab.

Der kilometerstandabhängige Speichereintrag wird in einem dritten Kilometerstand-Speicherfeld (Zeile 3) vorgenommen, wenn die ermittelte Zeitdauer t dieses Einschaltvorgangs größer als ein vorgegebner zweiter Zeitdauergrenzwert TG2 ist. Gleichzeit wird der zuletzt hier eingetragene kilometerstandabhängige Speichereintrag in das nachgeordnete Kilometerstand-Speicherfeld in Zeile 6 verschoben, in dem der relevante Kilometerstand des vorletzten Einschaltvorgangs mit einer t innerhalb dieses Zeitintervalls gespeichert wird. Laut Fig. 2 betrug der Kilometerstand beim letzten Einschaltvorgang innerhalb dieses Zeitintervalls 20100km, vgl. Zeile 3, und beim vorletzten Startvorgangs innerhalb dieses Zeitintervalls 16543km, vgl. Zeile 6.

Der kilometerstandabhängige Speichereintrag wird in einem zweiten Kilometerstand-Speicherfeld (Zeile 10) vorgenommen, wenn die ermittelte Zeitdauer t dieses Einschaltvorgangs größer als ein vorgegebner erster Zeitdauergrenzwert TG1 und nicht größer als der vorgegebene zweite Zeitdauergrenzwert TG2 ist. Gleichzeit wird der zuletzt hier eingetragene kilometerstandabhängige Speichereintrag in das nachgeordnete Kilometerstand-Speicherfeld in Zeile 13 verschoben, in dem der relevante Kilometerstand des vorletzten Einschaltvorgangs mit einer Zeitdauer t innerhalb dieses Zeitintervalls gespeichert wird. Laut Fig. 2 betrug der Kilometerstand beim letzten Einschaltvorgang innerhalb dieses Zeitintervalls 3122km, vgl. Zeile 10, und beim vorletzten Startvorgangs innerhalb dieses Zeitintervalls 3120km, vgl. Zeile 13.

Der kilometerstandabhängige Speichereintrag wird in einem ersten Kilometerstand-Speicherfeld (Zeile 17) vorgenommen, wenn die ermittelte Zeitdauer t dieses Einschaltvorgangs nicht größer als der vorgegebene erste Zeitdauergrenzwert TG1 ist. Gleichzeit wird der zuletzt hier eingetragene kilometerstandabhängige Speichereintrag in das nachgeordnete Kilometerstand-Speicherfeld in Zeile 19 verschoben, in dem der relevante Kilometerstand des vorletzten Einschaltvorgangs mit einer Zeitdauer t innerhalb dieses Zeitintervalls gespeichert wird. Laut Fig. 2 betrug der Kilometerstand beim letzten Einschaltvorgang innerhalb dieses Zeitintervalls 22134km, vgl. Zeile 17, und beim vorletzten Startvorgangs innerhalb dieses Zeitintervalls 22133km, vgl. Zeile 19.

Weiter umfasst die Speichereinheit Arten-Speicherfelder in den Zeilen 4, 11 und 18 und nachgeordnete Arten-Speicherfelder in den Zeilen 7, 14 und 20, in denen die artenabhängigen Speichereinträge vorgenommen werden. Bei den artenabhängigen Speichereinträgen handelt es sich um solche Einträge, die eine Information darüber geben, ob der Einschaltvorgang manuell oder automatisch angefordert wurde. In welchem Arten-Speicherfeld der artenabhängige Speichereintrag vorgenommen wird, hängt von der ermittelten Zeitdauer t des entsprechenden Einschaltvorgangs ab. Der artenabhängige Speichereintrag wird in einem dritten Arten-Speicherfeld (Zeile 4) vorgenommen, wenn die ermittelte Zeitdauer t dieses Einschaltvorgangs größer als ein vorgegebner zweiter Zeitdauergrenzwert TG2 ist. Gleichzeit wird der zuletzt hier eingetragene artenabhängige Speichereintrag in das nachgeordnete Arten-Speicherfeld in Zeile 7 verschoben, in dem die relevanten Daten bzgl. der Art des Einschaltvorgangs des vorletzten Einschaltvorgangs mit einer Zeitdauer t innerhalb dieses Zeitintervalls gespeichert werden. Laut Fig. 2 handelte es sich bei dem letzten Einschaltvorgang innerhalb dieses Zeitintervalls um einen Normalstart, also einen manuell angeforderten Start, vgl. Zeile 4. Bei dem vorletzten Startvorgangs mit einer Zeitdauer t, die größer als der vorgegebene zweite Zeitdauergrenzwert TG2 war, handelte es sich um einen Schnellstart, also einen automatisch angeforderten Start, vgl. Zeile 7.
Der artenabhängige Speichereintrag wird in einem zweiten Arten-Speicherfeld (Zeile 11) vorgenommen, wenn die ermittelte Zeitdauer t dieses Einschaltvorgangs größer als ein vorgegebner erster Zeitdauergrenzwert TG1 und nicht größer als der vorgegebene zweite Zeitdauergrenzwert TG2 ist. Gleichzeit wird der zuletzt hier eingetragene artenabhängige Speichereintrag in das nachgeordnete Arten-Speicherfeld in Zeile 14 verschoben, in dem die relevanten Daten bzgl. der Art des Einschaltvorgangs des vorletzten Einschaltvorgangs mit einer Zeitdauer t innerhalb dieses Zeitintervalls gespeichert werden. Laut Fig. 2 handelte es sich bei dem letzten Einschaltvorgang innerhalb dieses Zeitintervalls um einen Schnellstart, vgl. Zeile 11 und bei dem vorletzten Startvorgangs innerhalb dieses Zeitintervalls ebenfalls um einen Schnellstart, vgl. Zeile 14.

Der artenabhängige Speichereintrag wird in einem ersten Arten-Speicherfeld (Zeile 18) vorgenommen, wenn die ermittelte Zeitdauer t dieses Einschaltvorgangs nicht größer als der vorgegebene erste Zeitdauergrenzwert TG1 ist, also ein Start mit einer erwarteten Zeitdauer t vorliegt. Gleichzeit wird der zuletzt hier eingetragene artenabhängige Speichereintrag in das nachgeordnete Arten-Speicherfeld in Zeile 20 verschoben, in dem die relevanten Daten bzgl. der Art des Einschaltvorgangs des vorletzten Einschaltvorgangs mit einer Zeitdauer t innerhalb dieses Zeitintervalls gespeichert werden. Laut Fig. 2 handelte es sich bei dem letzten Einschaltvorgang innerhalb dieses Zeitintervalls um einen Schnellstart, vgl. Zeile 18 und bei dem vorletzten Startvorgangs innerhalb dieses Zeitintervalls ebenfalls um einen Schnellstart, vgl. Zeile 20.

Weiter umfasst die Speichereinheit SP Ursachen-Speicherfelder in den Zeilen 5 und 12 und nachgeordnete Ursachen-Speicherfelder in den Zeilen 8 und 15, in denen ursachenabhängige Speichereinträge vorgenommen werden um die Information zu hinterlegen, warum der entsprechende Startvorgang länger als erwartet gedauert hat. Da diese Information nur bei Einschaltvorgängen relevant ist, bei denen die ermittelte Zeitdauer t des Einschaltvorgangs länger als erwartet ist, sind für das Zeitintervall von 0 bis zum vorgegebenen ersten Zeitdauergrenzwert TG1 keine Ursachen-Speicherfelder vorgesehen. In welchem Ursachen-Speicherfeld der als Bitwort aufgebaute ursachenabhängige Speichereintrag vorgenommen wird, hängt von der ermittelten Zeitdauer t des entsprechenden Einschaltvorgangs ab.

Der ursachenabhängige Speichereintrag wird in einem dritten Ursachen-Speicherfeld (Zeile 5) vorgenommen, wenn die ermittelte Zeitdauer t dieses Einschaltvorgangs größer als ein vorgegebner zweiter Zeitdauergrenzwert TG2 ist. Gleichzeit wird der zuletzt hier eingetragene ursachenabhängige Speichereintrag in das nachgeordnete Ursachen-Speicherfeld in Zeile 8 verschoben, in dem die Informationen über die Ursachen des vorletzten Einschaltvorgangs mit einer Zeitdauer t innerhalb dieses Zeitintervalls gespeichert werden. Laut Fig. 2 lag hier eine Ursachen vor, die dem dritten Bit dieses Bitworts zugeordnet ist, vgl. Zeile 5, und beim vorletzten Startvorgang innerhalb dieses Zeitintervalls eine Ursache die dem ersten Bit dieses Bitworts zugeordnet ist, vgl. Zeile 8.

Der ursachenabhängige Speichereintrag wird in einem zweiten Ursachen-Speicherfeld (Zeile 12) vorgenommen, wenn die ermittelte Zeitdauer t dieses Einschaltvorgangs größer als ein vorgegebner erster Zeitdauergrenzwert TG1 und nicht größer als der vorgegebene zweite Zeitdauergrenzwert TG2 ist. Gleichzeit wird der zuletzt hier eingetragene ursachenabhängige Speichereintrag in das nachgeordnete Ursachen-Speicherfeld in Zeile 15 verschoben, in dem die Informationen über die Ursachen des vorletzten Einschaltvorgangs mit einer Zeitdauer t innerhalb dieses Zeitintervalls gespeichert werden. Laut Fig. 2 lag in beiden Fällen eine Ursache vor, die dem ersten Bit dieses Bitworts zugeordnet ist, vgl. Zeile 12 und 15.

Dieser Aufbau der Speichereinheit SP gemäß Fig. 2 stellt nur eine von vielen Möglichkeiten dar, wie eine Speichereinheit ausgebaut sein kann. So können bspw. auch mehrere zurückliegende Einschaltvorgänge innerhalb eines Zeitintervalls und deren relevante Informationen in einem entsprechend aufgebauten Ringspeicher gespeichert werden. Ebenso könnten die Informationen zu den Einschaltvorgängen, deren Zeitdauer t innerhalb der zu erwartenden Zeit liegen, entfallen.

Um diese Informationen auslesen zu können, muss ein Auslesegerät bereitgestellt werden, welches die verschiedenen Speicherfelder der Speichereinheit in geeigneter Form auslesen kann. Das Auslesegerät kann bspw. derart aufgebaut sein, dass die das Auslesegerät bedienende Person im Vorfeld auswählen kann, welche Information er angezeigt haben will.

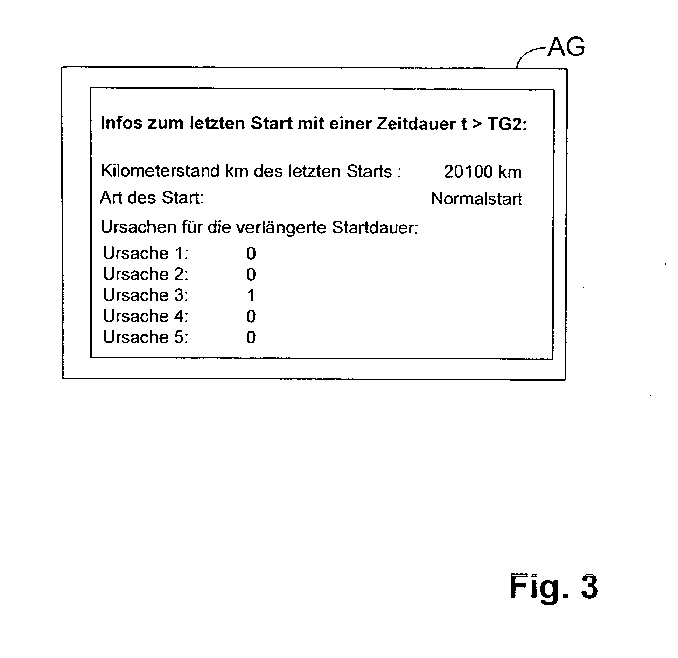

In der Fig. 3 ist eine beispielhafte Displayanzeige eines Auslesegeräts AG dargestellt. Hier werden alle relevanten bzw. gespeicherten Informationen zum letzten Einschaltvorgang dargestellt, dessen Zeitdauer t größer als der vorgegebene zweite Zeitdauergrenzwert TG2 war. So wird der Kilometerstand km und die Art des letzten Einschaltvorgangs mit der sehr langen Zeitdauer t angezeigt. Weiter wird angezeigt, welche Ursachen ermittelt wurden. So kann die das Auslesegerät AG bedienende Person sehr schnell erkennen, dass der letzte Einschaltvorgang mit einer Zeitdauer t größer als der zweite Zeitdauergrenzwert TG2 bei einem Kilometerstand von 20100 km war, es sich hierbei um einen Normalstart handelte, und als mögliche Ursache die Ursache 3 ermittelt wurde.

Anhand dieser Displayanzeige ist es nun möglich, das Fahrzeug im Hinblick auf die Ursache 3 zu untersuchen und ggf. Probleme, die zu dieser Ursache führen könnten, zu beheben. Eine Reparatur des Fahrzeugs kann somit wesentlich einfachen und schneller vorgenommen werden.

## Patentansprüche

1. Steuerungseinheit zur Steuerung eines Einschaltvorgangs eines Fahrzeugtriebwerks in einem Kraftfahrzeug, wobei die Steuerungseinheit auf eine Einschaltaufforderung ein Einschaltsignal zum Vornehmen entsprechender Einschaltmaßnahmen zum Einschalten des Fahrzeugtriebwerks aussendet, und die Steuerungseinheit ein Speichersignal zum Speichern zumindest eines Speichereintrags an eine Speichereinheit sendet, wenn vorgegebene Bedingungen erfüllt sind, wobei die Steuerungseinheit (SE) eine Zeitdauer (t) vom Beginn des Einschaltvorgangs bis zur Erreichen eines erfolgreichen Startvorgangs ermittelt und in Abhängigkeit von der ermittelten Zeitdauer (t) ein zeitdauer-abhängiges Speichersignal (t) an die Speichereinheit (SP) sendet und die Speichereinheit (SP) einen zeitdauerabhängigen Speichereintrag (Zeile 1, 2, 9, 16) vornimmt, **dadurch gekennzeichnet, dass** das Fahrzeugtriebwerk auf zumindest zwei verschiedene Arten (m, a), nämlich im Sinne eines Normalstarts (m) und eines automatischen Starts (a) gestartet werden kann und die Steuerungseinheit (SE) zusätzlich ein artenabhängiges Speichersignal (St1, St2) an die Speichereinheit (SP) sendet und die Speichereinheit (SP) einen artenabhängigen Speichereintrag (St1, St2) vornimmt.

2. Steuerungseinheit nach Anspruch 1, **dadurch gekennzeichnet, dass** der zeitdauerabhängige Speichereintrag (Zeile 1) ein Maß für die ermittelte Zeitdauer (t) ist.

3. Steuerungseinheit nach Anspruch 1 oder 2, **dadurch gekennzeichnet, dass** das zeitdauerabhängige Speichersignal (t) nur dann gesendet wird, und/oder der zeitdauerabhängige Speichereintrag (Zeile 1, 2, 9, 16) nur dann vorgenommen wird, wenn die ermittelte Zeitdauer (t) einen vorgegebenen ersten Zeitdauergrenzwert (TG1) überschreitet.

4. Steuerungseinheit nach einem der vorangegangenen Ansprüche, **dadurch gekennzeichnet, dass** die Speichereinheit (SP) auf das zeitdauerabhängige Speichersignal (t) den Wert einer vorhandenen ersten Zähleinheit (Zeile 16) um Eins erhöht, wenn die ermittelte Zeitdauer (t) nicht größer als ein vorgegebener erster Zeitdauergrenzwert (TG1) ist.

5. Steuerungseinheit nach einem der vorangegangenen Ansprüche, **dadurch gekennzeichnet, dass** die Speichereinheit (SP) auf das zeitdauerabhängige Speichersignal (t) den Wert einer vorhandenen zweiten Zähleinheit (Zeile 9) um Eins erhöht, wenn die ermittelte Zeitdauer (t) größer als ein vorgegebener erster Zeitdauergrenzwert (TG1) und nicht größer als ein vorgegebener zweiter Zeitdauergrenzwert (ZG2) ist.

6. Steuerungseinheit nach einem der vorangegangenen Ansprüche, **dadurch gekennzeichnet, dass** die Speichereinheit (SP) auf das zeitdauerabhängige Speichersignal (t) den Wert einer vorhandenen dritten Zähleinheit (Zeile 2) um Eins erhöht, wenn die ermittelte Zeitdauer (t) größer als ein vorgegebener zweiter Zeitdauergrenzwert (TG2) ist.

7. Steuerungseinheit nach einem der vorangegangenen Ansprüche, **dadurch gekennzeichnet, dass** der artenabhängige Speichereintrag (St1, St2) in einem vorgegebenen Arten-Speicherfeld (SPF, Zeile 4, 7, 11, 14, 18, 20) eingetragen wird, wobei das Arten-Speicherfeld (SPF, Zeile 4, 6, 11, 14, 18, 20), in dem der artenabhängige Speichereintrag (St1, St2) eingetragen wird, in Abhängigkeit von der ermittelten Zeitdauer (t) vorgegeben wird.

8. Steuerungseinheit nach einem der vorangegangenen Ansprüche, **dadurch gekennzeichnet, dass** der artenabhängige Speichereintrag (St1, St2) in einem vorgegebenen ersten Arten-Speicherfeld (SPF, Zeile 18) eingetragen wird, wenn die ermittelte Zeitdauer (t) nicht größer als ein vorgegebener erster Zeitdauergrenzwert (TG1) ist.

9. Steuerungseinheit nach einem der vorangegangenen Ansprüche, **dadurch gekennzeichnet, dass** der artenabhängige Speichereintrag (St1, St2) in einem vorgegebenen zweiten Arten-Speicherfeld (SPF, Zeile 11) eingetragen wird, wenn die ermittelte Zeitdauer (t) größer als ein vorgegebener erster Zeitdauergrenzwert (TG1) und nicht größer als ein vorgegebener zweiter Zeitdauergrenzwert (TG2) ist.

10. Steuerungseinheit nach einem der vorangegangenen Ansprüche, **dadurch gekennzeichnet, dass** der artenabhängige Speichereintrag (St1, ST2) in einem vorgegebenen dritten Arten-Speicherfeld (SPF, Zeile 4) eingetragen wird, wenn die ermittelte Zeitdauer (t) größer als ein vorgegebener zweiter Zeitdauergrenzwert (TG2) ist.

11. Steuerungseinheit nach einem der vorangegangenen Ansprüche, **dadurch gekennzeichnet, dass** die Steuereinheit (SE) zusätzlich ein kilometerstandabhängiges Speichersignal (km) an die Speichereinheit (SP) sendet und die Speichereinheit (SP) einen kilometerstandabhängigen Speichereintrag (km) vornimmt.

12. Steuerungseinheit nach Anspruch 11, **dadurch gekennzeichnet, dass** der kilometerstandabhängige Speichereintrag (km) in einem vorgegebenen Kilometerstand-Speicherfeld (SPF, Zeile 3, 6, 10, 13, 17, 19) eingetragen wird, wobei das Kilometerstand-Speicherfeld (SPF, Zeile 3, 6, 10, 13, 17, 19), in dem der kilometerstandabhängige Speichereintrag (km) eingetragen wird, in Abhängigkeit von der ermittelten Zeitdauer (t) vorgegeben wird.

13. Steuerungseinheit nach Anspruch 11 oder 12, **dadurch gekennzeichnet, dass** der kilometerstandabhängige Speichereintrag (km) in einem vorgegebenen ersten Kilometerstand-Speicherfeld (SPF, Zeile 17) eingetragen wird, wenn die ermittelte Zeitdauer (t) nicht größer als ein vorgegebener erster Zeitdauergrenzwert (TG1) ist.

14. Steuerungseinheit nach einem der Ansprüche 11 - 13, **dadurch gekennzeichnet, dass** der kilometerstandabhängige Speichereintrag (KM) in einem vorgegebenen zweiten Kilometer-Speicherfeld (SPF, Zeile 10) eingetragen wird, wenn die ermittelte Zeitdauer (t) größer als ein vorgegebener erster Zeitdauergrenzwert (TG1) und nicht größer als ein vorgegebener zweiter Zeitdauergrenzwert (TG2) ist.

15. Steuerungseinheit nach einem der Ansprüche 11 - 14, **dadurch gekennzeichnet, dass** der kilometerstandabhängige Speichereintrag (km) in einem vorgegebenen dritten Kilometer-Speicherfeld (SPF, Zeile 3) eingetragen wird, wenn die ermittelte Zeitdauer (t) größer als ein vorgegebener zweiter Zeitdauergrenzwert (TG2) ist.

16. Steuerungseinheit nach einem der vorangegangenen Ansprüche, **dadurch gekennzeichnet, dass** die Steuereinheit (SE) bei einer ermittelten Zeitdauer (t), die größer als ein vorgegebener erster Zeitdauergrenzwert (TG1) ist, zusätzlich ein ursachenabhängiges Speichersignal (U) an die Speichereinheit (SP) sendet und die Speichereinheit (SP) einen ursachenabhängigen Speichereintrag (U) vornimmt.

17. Steuerungseinheit nach Anspruch 16, **dadurch gekennzeichnet, dass** der ursachenabhängige Speichereintrag (U) in einem vorgegebenen Ursachen-Speicherfeld (SPF, Zeile 5, 8, 12, 15) eingetragen wird, wobei das Ursachen-Speicherfeld (SPF, Zeile 5, 8, 12, 15), in dem der ursachenabhängige Speichereintrag (U) eingetragen wird, in Abhängigkeit von der ermittelten Zeitdauer (t) vorgegeben wird.

18. Steuerungseinheit nach Anspruch 16 oder 17, **dadurch gekennzeichnet, dass** der ursachenabhängige Speichereintrag (U) in einem vorgegebenen zweiten Ursachen-Speicherfeld (SPF, Zeile 12) eingetragen wird, wenn die ermittelte Zeitdauer (t) größer als ein vorgegebener erster Zeitdauergrenzwert (TG1) und nicht größer als ein vorgegebener zweiter Zeitdauergrenzwert (TG2) ist.

19. Steuerungseinheit nach einem der Ansprüche 16 - 18, **dadurch gekennzeichnet, dass** der ursachenabhängige Speichereintrag (U) in einem vorgegebenen dritten Ursachen-Speicherfeld (SPF, Zeile 5) eingetragen wird, wenn die ermittelte Zeitdauer (t) größer als ein vorgegebener zweiter Zeitdauergrenzwert (TG2) ist.

20. Steuerungseinheit nach einem der Ansprüche 16 - 19, **dadurch gekennzeichnet, dass** der ursachenabhängige Speichereinheit (U) von zumindest einer der folgenden Ursachen abhängt:
(a) Die aktuelle Umgebungs-/Außentemperatur ist kleiner als ein vorgegebener Minimum-Temperaturwert oder größer als ein vorgegebener Maximum-Temperaturwert,
(b) Mechanischer oder elektrischer Fehler, oder auch eine Kombination aus einem mechanischen und einem elektrischen Fehler im Kraftstoffsystem,
(c) Mechanischer oder elektrischer Fehler, oder auch eine Kombination aus einem mechanischen und einem elektrischen Fehler im Kraftstoffzuführungssystem,
(d) Mechanischer oder elektrischer Fehler, oder auch eine Kombination aus einem mechanischen und einem elektrischen Fehler im Hochdruckpumpensystem,
(e) Tankinhalt kleiner als ein vorgegebener Minimum-Tankinhalt,
(f) Mechanischer oder elektrischer Fehler, oder auch eine Kombination aus einem mechanischen und einem elektrischen Fehler im Anlasser-/Startsystem,
(g) Mechanischer oder elektrischer Fehler, oder auch eine Kombination aus einem mechanischen und einem elektrischen Fehler im Batteriesystem,
(h) Ladezustand der Batterie ist kleiner als ein vorgegebener Minimum-Ladezustand, oder die Batterie ist geschädigt oder die Batterie ist gealtert,,
(i) Mechanischer oder elektrischer Fehler, oder auch eine Kombination aus einem mechanischen und einem elektrischen Fehler im Kurbelwellensynchronisierungssystem,
(j) Mechanischer oder elektrischer Fehler, oder auch eine Kombination aus einem mechanischen und einem elektrischen Fehler im Nockenwellensynchronisierungssystem,
(k) Mechanischer oder elektrischer Fehler, oder auch eine Kombination aus einem mechanischen und einem elektrischen Fehler im System einer Wegfahrsperre oder eines Diebstahlschutzsystems,
(l) Mechanischer oder elektrischer Fehler, oder auch eine Kombination aus einem mechanischen und einem elektrischen Fehler in einem Fahrzeug-Zugangssystems,
(m) aktueller Umgebungs-/Außendruck der Luft ist kleiner als ein vorgegebener Minimum-Druckwert oder größer als ein vorgegebener Maximum-Druckwert,
(n) Fehler in der Generatorkommunikation.

## Claims

1. A control unit for controlling a start-up process of a vehicle driving mechanism in a motor vehicle, wherein the control unit transmits a start-up signal to carry out corresponding start-up measures to start up the vehicle driving mechanism in response to a start-up request, and the control unit transmits a memory signal to a memory unit to store at least one memory input when predetermined conditions are fulfilled, wherein the control unit (SE) determines a time period (t) from the beginning of the start-up process to the reaching of a successful starting process and, depending on the time period (t) determined, sends a time period-dependent memory signal (t) to the memory unit (SP) and the memory unit (SP) carries out a time period-dependent memory input (line 1, 2, 9, 16), **characterised in that** the vehicle driving mechanism can be started in at least two different ways (m, a), namely in the sense of a normal start (m) and an automatic start (a) and the control unit (SE) additionally sends a type-dependent memory signal (St1, St2) to the memory unit (SP) and the memory unit (SP) carries out a type-dependent memory input (St1, St2).

2. A control unit according to claim 1, **characterised in that** the time period-dependent memory input (line 1) is a measure of the time period (t) determined.

3. A control unit according to claim 1 or 2, **characterised in that** the time period-dependent memory signal (t) is only sent, and/or the time period-dependent memory input (line 1, 2, 9, 16) is only carried out, when the determined time period (t) exceeds a predetermined first time period limit value (TG1).

4. A control unit according to any one of the preceding claims, **characterised in that** in response to the time period-dependent memory signal (t), the memory unit (SP) increases the value of an existing first counting unit (line 16) by one when the determined time period (t) is not greater than a predetermined first time period limit value (TG1).

5. A control unit according to any one of the preceding claims, **characterised in that** in response to the time period-dependent memory signal (t), the memory unit (SP) increases the value of an existing second counting unit (line 9) by one when the determined time period (t) is greater than a predetermined first time period limit value (TG1) and is not greater than a predetermined second time period limit value (ZG2).

6. A control unit according to any one of the preceding claims, **characterised in that** in response to the time period-dependent memory signal (t), the memory unit (SP) increases the value of an existing third counting unit (line 2) by one when the determined time period (t) is greater than a predetermined second time period limit value (ZG2).

7. A control unit according to any one of the preceding claims, **characterised in that** the type-dependent memory input (St1, St2) is entered in a predetermined type memory field (SPF, line 4, 7, 11, 14, 18, 20), the type memory field (SPF, line 4, 6, 11, 14, 18, 20), in which the type-dependent memory input (St1, St2) is entered, being predetermined depending on the time period (t) determined.

8. A control unit according to any one of the preceding claims, **characterised in that** the type-dependent memory input (St1, St2) is entered in a predetermined first type memory field (SPF, line 18) when the determined time period (t) is not greater than a predetermined first time period limit value (TG1).

9. A control unit according to any one of the preceding claims, **characterised in that** the type-dependent memory input (St1, St2) is entered in a predetermined second type memory field (SPF, line 11) when the determined time period (t) is greater than a predetermined first time period limit value (TG1) and is not greater than a predetermined second time period limit value (TG2).

10. A control unit according to any one of the preceding claims, **characterised in that** the type-dependent memory input (St1, St2) is entered in a predetermined third type memory field (SPF, line 4) when the determined time period (t) is greater than a predetermined second time period limit value (TG2).

11. A control unit according to any one of the preceding claims, **characterised in that** the control unit (SE) additionally sends a kilometre reading-dependent memory signal (km) to the memory unit (SP) and the memory unit (SP) carries out a kilometre reading-dependent memory input (km).

12. A control unit according to claim 11, **characterised in that** the kilometre reading-dependent memory input (km) is entered in a predetermined kilometre reading memory field (SPF, line 3, 6, 10, 13, 17, 19), the kilometre reading memory field (SPF, line 3, 6, 10, 13, 17, 19), in which the kilometre reading-dependent memory input (km) is entered, being predetermined depending on the time period (t) determined.

13. A control unit according to claim 11 or 12, **characterised in that** the kilometre reading-dependent memory input (km) is entered in a predetermined first kilometre reading memory field (SPF, line 17) when the determined time period (t) is not greater than a predetermined first time period limit value (TG1).

14. A control unit according to any one of claims 11 to 13, **characterised in that** the kilometre reading-dependent memory input (km) is entered in a predetermined second kilometre memory field (SPF, line 10) when the determined time period (t) is greater than a predetermined first time period limit value (TG1) and not greater than a predetermined second time period limit value (TG2).

15. A control unit according to any one of claims 11 to 14, **characterised in that** the kilometre reading-dependent memory input (km) is entered in a predetermined third kilometre memory field (SPF, line 3) when the determined time period (t) is greater than a predetermined second time period limit value (TG2).

16. A control unit according to any one of the preceding claims, **characterised in that** the control unit (SE) at a determined time period (t), which is greater than a predetermined first time period limit value (TG1), additionally sends a cause-dependent memory signal (U) to the memory unit (SP) and the memory unit (SP) carries out a cause-dependent memory input (U).

17. A control unit according to claim 16, **characterised in that** the cause-dependent memory input (U) is entered in a predetermined cause memory field (SPF, line 5, 8, 12, 15), the cause memory field (SPF, line 5, 8, 12, 15), in which the cause-dependent memory input (U) is entered, being predetermined depending on the determined time period (t).

18. A control unit according to claim 16 or 17, **characterised in that** the cause-dependent memory input (U) is entered in a predetermined second cause memory field (SPF, line 12) when the determined time period (t) is greater than a predetermined first time period limit value (TG1) and is not greater than a predetermined second time period limit value (TG2).

19. A control unit according to any one of claims 16 to 18, **characterised in that** the cause-dependent memory input (U) is entered in a predetermined third cause memory field (SPF, line 5) when the determined time period (t) is greater than a predetermined second time period limit value (TG2).

20. A control unit according to any one of claims 16 to 19, **characterised in that** the cause-dependent memory input (U) depends on at least one of the following causes:
(a) the current environmental/external temperature is lower than a predetermined minimum temperature value or greater than a predetermined maximum temperature value,
(b) a mechanical or electrical fault, or else a combination of a mechanical and an electrical fault in the fuel system,
(c) a mechanical or electrical fault, or else a combination of a mechanical and an electrical fault in the fuel supply system,
(d) a mechanical or electrical fault, or else a combination of a mechanical and an electrical fault in the high pressure pump system,
(e) a tank content less than predetermined minimum tank content,
(f) a mechanical or electrical fault, or else a combination of a mechanical and an electrical fault in the starter/starting system,
(g) a mechanical or electrical fault, or else a combination of a mechanical and an electrical fault in the battery system,
(h) the charge state of the battery is less than a predetermined minimum charge state, or the battery is damaged or the battery has aged,
(i) a mechanical or electrical fault, or else a combination of a mechanical and an electrical fault in the crankshaft synchronisation system,
(j) a mechanical or electrical fault, or else a combination of a mechanical and an electrical fault in the camshaft synchronisation system,
(k) a mechanical or electrical fault, or else a combination of a mechanical and an electrical fault in the system of an immobiliser or an anti-theft system,
(l) a mechanical or electrical fault, or else a combination of a mechanical and an electrical fault in a vehicle access system,
(m) the current environmental/external pressure of the air is less than a predetermined minimum pressure value or greater than a predetermined maximum pressure value,
(n) a fault in the generator communication.

## Revendications

1. Unité de commande d'une opération de changement de vitesse d'une boîte de vitesse de véhicule automobile,
- l'unité de commande émettant un signal de commutation en réponse à une requête de commutation pour effectuer une opération de commutation correspondante et commuter la boîte de vitesse, et
- l'unité de commande envoyant un signal d'enregistrement pour enregistrer au moins une entrée dans une unité de mémoire lorsque les conditions prédéterminées sont remplies,
- l'unité de commande (SE) déterminant la durée (t) entre le début de l'opération de commutation jusqu'à sa réussite et en fonction de la durée (t) ainsi obtenue, elle envoie un signal de mémoire (t) dépendant du temps à l'unité de mémoire (SP) et cette unité de mémoire (SP) effectue un enregistrement de mémoire (lignes 1, 2, 9, 16) dépendant du temps,
unité de commande **caractérisée en ce que**
le moteur du véhicule peut être démarré selon au moins deux modes différents (m,a) à savoir le mode de démarrage normal (m) et le mode de démarrage automatique (a), et
l'unité de commande (SE) envoie en plus un signal de mémoire (St1,St2) dépendant du mode, à l'unité de mémoire (SP) et celle-ci effectue un enregistrement (St1, St2) en fonction du mode.

2. Unité de commande selon la revendication 1,
**caractérisée en ce que**
l'enregistrement en mémoire (ligne 1) dépendant du temps est une mesure de la durée déterminée (t).

3. Unité de commande selon la revendication 1 ou 2,
**caractérisée en ce que**
le signal de mémoire (t) dépendant du temps n'est envoyé et/ou l'enregistrement en mémoire dépendant du temps (lignes 1, 2, 9, 16) n'est effectué que si la durée obtenue (t) dépasse un premier seuil prédéfini de durée (TG1).

4. Unité de commande selon l'une des revendications précédentes, **caractérisée en ce que**
l'unité de mémoire (SP) augmente d'une unité, l'état d'une première unité de comptage existante (ligne 16) selon le signal de mémoire (t) dépendant du temps si la durée déterminée (t) ne dépasse pas un premier seuil de durée (TG 1) prédéfini.

5. Unité de commande selon l'une des revendications précédentes, **caractérisée en ce que**
l'unité de mémoire (SP) augmente d'une unité, l'état d'une seconde unité de comptage (ligne 9) existante, selon le signal de mémoire (t) dépendant du temps si la durée déterminée (t) est supérieure à un premier seuil de durée prédéfini (TG1) sans être supérieure à un second seuil prédéfini de durée (ZG2).

6. Unité de commande selon l'une des revendications précédentes, **caractérisée en ce que**
l'unité de mémoire (SP) augmente d'une unité, l'état d'une troisième unité de comptage (ligne2) existante, en fonction du signal de mémoire (t) dépendant du temps si la durée déterminée (t) est supérieure à un second seuil prédéfini de durée (TG2).

7. Unité de commande selon l'une des revendications précédentes, **caractérisée en ce que**
l'enregistrement en mémoire dépendant du mode est enregistré dans un champs de mémoire de mode, prédéfini (SPF, lignes 4, 7, 11, 14, 18, 20), le champ de mémoire de mode (SPF, lignes 4, 7, 11, 14, 18, 20) étant enregistré dans l'entrée de mémoire (St1, St2) dépendant du mode, en fonction de la durée prédéfinie (t).

8. Unité de commande selon l'une des revendications précédentes, **caractérisée en ce que**
l'enregistrement en mémoire dépendant du mode (St1, St2) est enregistré dans un premier champ de mémoire de mode (SPF, ligne 18) prédéfini, si la durée déterminée (t) n'est pas supérieure à un premier seuil de durée prédéfini (TG1).

9. Unité de commande selon l'une des revendications précédentes, **caractérisée en ce que**
l'enregistrement en mémoire dépendant du mode (St1, St2) est enregistré dans un second champ de mémoire de mode (SPF, ligne 11) prédéfini si la durée déterminée (t) est supérieure à un premier seuil prédéfini de durée (TG1) sans être supérieur à un second seuil prédéfini de durée (TG2).

10. Unité de commande selon l'une des revendications précédentes, **caractérisée en ce que**
l'enregistrement en mémoire dépendant du mode (St1, St2) est fait dans un champs de mémoire de troisième mode (SPF, ligne 4) si la durée déterminée (t) est supérieure à un second seuil de durée prédéfini (TG2).

11. Unité de commande selon l'une des revendications précédentes, **caractérisée en ce que**
l'unité de commande (SE) envoie en plus un signal de mémoire (km) dépendant de l'état kilométrique à l'unité de mémoire (SP) qui effectue un enregistrement en mémoire (km) dépendant de l'état kilométrique.

12. Unité de commande selon la revendication 11,
**caractérisée en ce que**
l'enregistrement en mémoire (km) dépendant de l'état kilométrique est fait dans un champ de mémoire d'état kilométrique (SPF, lignes 3, 6, 10, 13, 17, 19) prédéfini, le champ de mémoire d'état kilométrique (SPF, lignes 3, 6, 10, 13, 17, 19) dans lequel est fait l'enregistrement en mémoire (km) dépendant de l'état kilométrique est prédéfini en fonction de la durée déterminée (t).

13. Unité de commande selon la revendication 11 ou 12,
**caractérisée en ce que**
l'enregistrement en mémoire (km) dépendant de l'état kilométrique dans un premier champ de mémoire d'état kilométrique (SPF, ligne 17) prédéfini, est fait si la durée déterminée (t) n'est pas supérieure à un premier seuil prédéfini de durée (TG 1).

14. Unité de commande selon l'une des revendications 11 - 13, **caractérisée en ce que**
l'enregistrement en mémoire (km) dépendant de l'état kilométrique est fait dans un second champ de mémoire de kilométrique (SPF, ligne 10) prédéfini si la durée déterminée (t) est supérieure à un premier seuil prédéfini de durée (TG1) sans dépasser à un second seuil prédéfini de durée (TG2).

15. Unité de commande selon l'une des revendications 11 - 14, **caractérisée en ce que**
l'enregistrement en mémoire (km) dépendant de l'état kilométrique est fait dans un troisième champ de mémoire kilométrique (SPF, ligne 3) si la durée déterminée (t) est supérieure à un second seuil prédéfini de durée (TG2).

16. Unité de commande selon l'une des revendications précédentes, **caractérisée en ce que**
l'unité de commande (SE) pour une durée déterminée (t) est supérieure à un premier seuil prédéfini de durée (TG1) et envoie en plus un signal de mémoire (U) dépendant de l'origine, à l'unité de mémoire (SP) qui effectue un enregistrement en mémoire (U) dépendant de l'origine.

17. Unité de commande selon la revendication 16,
**caractérisée en ce que**
l'enregistrement en mémoire (U) dépendant de l'origine est fait dans un champ de mémoire d'origine (SPF, lignes 5, 8, 12, 15) prédéfini,
le champ de mémoire d'origine (SPF, lignes 5, 8, 12, 15) dans lequel est fait l'enregistrement de mémoire dépendant de l'origine (U) est effectué en fonction de la durée déterminée (t).

18. Unité de commande selon la revendication 16 ou 17,
**caractérisée en ce que**
l'enregistrement en mémoire dépendant de l'origine (U) est fait dans un second champ de mémoire d'origine, prédéfini (SPF, ligne 12) si la durée déterminée (t) est supérieure à un premier seuil de durée (TG1) et sans dépasser un second seuil prédéfini de durée (TG2).

19. Unité de commande selon l'une des revendications 16 - 18, **caractérisée en ce que**
l'enregistrement en mémoire dépendant de l'origine (U) est fait dans un troisième champs de mémoire d'origine (SPF, ligne 5), prédéfini, si la durée déterminée (t) est supérieure à un second seuil prédéfini de durée (TG2).

20. Unité de commande selon l'une des revendications 16 - 19, **caractérisée en ce que**
l'unité de mémoire dépendant de l'origine (U) dépend au moins de l'une des origines suivantes :
a) la température ambiante/température extérieure actuelle est inférieure à une température minimale prédéfinie ou supérieure à une température maximale prédéfinie,
b) un défaut mécanique ou électrique ou la combinaison d'un défaut mécanique et électrique dans le système de carburant,
c) un défaut mécanique ou électrique ou la combinaison d'un défaut mécanique et électrique dans le système d'alimentation en carburant,
d) un défaut mécanique ou électrique ou la combinaison d'un défaut électrique ou mécanique dans le système de la pompe haute pression,
e) le contenu du réservoir est en dessous d'un contenu minimum prédéfini,
f) un défaut mécanique ou électrique ou la combinaison d'un défaut mécanique et d'un défaut électrique dans le système de démarrage,
g) un défaut mécanique ou électrique ou la combinaison d'un défaut mécanique ou électrique dans le système de batterie,
h) l'état de charge de la batterie est inférieur à un état de charge minimum ou encore la batterie est endommagée ou vieillie,
i) un défaut mécanique ou électrique ou la combinaison d'un défaut mécanique et d'un défaut électrique dans le système de synchronisation de vilebrequin,
j) un défaut mécanique ou électrique ou la combinaison d'un défaut mécanique et d'un défaut électrique dans le système de synchronisation des arbres à cames,
k) un défaut mécanique ou électrique ou la combinaison d'un défaut mécanique et d'un défaut électrique dans le système du verrouillage d'immobilisation ou d'un système antivol,
l) un défaut mécanique ou électrique ou la combinaison d'un défaut mécanique et d'un défaut électrique dans le système d'accès au véhicule,
m) la pression ambiante/pression extérieure actuelle de l'air est inférieur à une pression minimum prédéfinie ou supérieure à une pression maximum prédéfinie,
n) un défaut dans la communication du générateur.
